# EUROPÄISCHE PATENTSCHRIFT

(11) **EP 0 501 521 B1**
(45) Veröffentlichungstag und Bekanntmachung des Hinweises auf die Patenterteilung: **11.12.1996**
(21) Anmeldenummer: 92103574.7
(22) Anmeldetag: 02.03.1992
(51) Int. Cl.: H02K 29/08, H02K 37/10

(54) **Bürstenloser Gleichstrommotor für niedrige Drehzahlen**
Brushless direct current motor for low speed
Moteur à courant continu sans balai pour vitesses réduites

(30) Priorität: 01.03.1991 DE 4106484
(43) Veröffentlichungstag der Anmeldung: 02.09.1992
(73) Patentinhaber: PAPST LICENSING GmbH, 78549 Spaichingen (DE)
(72) Erfinder: Müller Rolf, Dr, W-8000 München 22 (DE); Schmider, Fritz, W-7746 Hornberg (DE)
(74) Vertreter: Patentanwälte Westphal, Buchner, Mussgnug Neunert, Göhring

(56) Entgegenhaltungen:
- EP-A- 0 160 522
- DE-A- 1 763 769
- DE-A- 1 932 080
- DE-A- 3 502 284
- FR-A- 1 560 148
- GB-A- 2 211 030
- US-A- 3 119 941

## Beschreibung

Die Erfindung betrifft einen bürstenlosen und als Klauenmotor ausgebildeten Gleichstrommotor für niedrige Drehzahlen zum Antrieb von Einrichtungen mit einem Permanentmagnet-Außenläufer gemäß den Merkmalen des Oberbegriffs des Anspruchs 1.

Ein solcher Gleichstrommotor ist aus EP-A 0 160 522 bekannt. In diesem Dokument wird für einen sicheren Anlauf des Motors vorgeschlagen, zweigeteilte Polzähne, von denen mindestens ein Teil in Umlaufrichtung des Motors eine Verlängerung aufweist, vorzusehen. Die Polzähne sind allesamt so ausgerichtet, daß der Abstand zwischen den Polzähnen und dem inneren Umfang des Rotormagneten stets gleich groß ist.

In DE-A 17 63 769 ist ein Gleichstrommotor beschrieben, der Polzähne mit unterschiedlichem Abstand zum gegenüberliegenden Rotormagneten aufweist. Durch die symmetrische Gestaltung der Polzähne in bezug auf ihre Mittelachse wird jedoch kein sicherer Anlauf des Motors erreicht.

In US-A 3,119,941 ist ein Schrittmotor beschrieben, welcher von Pulsen der gleichen oder entgegengesetzten Polarität angesteuert wird. Aus GB-A 22 11 030 ist ein anderer Schrittmotor bekannt, der einen Rotor mit magnetischen Polen auf dessen Umlauffläche aufweist. In den beiden letztgenannten Dokumenten ist das Problem eines sicheren Anlaufs des Motors nicht angesprochen.

Der vorliegenden Erfindung liegt die Aufgabe zugrunde, einen Motor der eingangs genannten Art so weiterzubilden, daß er sich durch niedrigen Aufwand und geringen Verschleiß auzeichnet.

Diese Aufgabe wird durch einen Gleichstrommotor mit den Merkmalen des Anspruchs 1 gelöst.

Vorteilhafte Weiterbildungen der Erfindung sind Gegenstand der Unteransprüche.

Ein solcher Gleichstrommotor hat den Vorteil, daß er verhältnismäßig niedrige Drehzahlen ermöglicht und damit zum direkten Antrieb von Einrichtungen, die nur eine geringe Last für den Motor darstellen, geeignet ist. Dies verringert deutlich den Aufwand für die gesamte Antriebseinheit, verringert den Raumbedarf und hat weniger Verschleiß. Es werden hierbei die besonderen Vorteile von Klauenpolmotoren ausgenutzt, daß der Aufwand für die Statorwicklung und deren Ansteuerung auch bei höherer Polzahl nicht erhöht wird, da normalerweise auf einem Wickelkörper nur eine oder zwei Wicklungen erforderlich sind. Die damit normalerweise verbundenen Nachteile dieser Motorenbauart, daß Klauenpolmotoren bei höheren Drehzahlen aufgrund der hohen Eisenverluste einen schlechten Wirkungsgrad haben, sind bei den niedrigen Drehzahlen ohne Belang. Die Erzeugung eines über den Drehwinkel variablen Luftspalts ist besonders einfach, weil eine Schrägstellung der Polzähne durch einfaches Schränken hergestellt werden kann.

Motoren und Generatoren in Klauenpolbauart sind zwar an sich bekannt, sie sind jedoch bisher nicht in der Bauart als bürstenloser Gleichstrommotor für niedrige Drehzahlen im Direktantrieb angewendet worden, sondern nur als Klauenpol-Synchronmotoren (z.B. für Uhrwerke), sowie als Generatoren für Fahrräder oder Automobile mit entsprechenden Übersetzungen.

Der Einsatz eines Klauenpolmotors als bürstenloser Gleichstrommotor für niedrige Drehzahlen macht erst dann Sinn, wenn der Motor eine Polpaarzahl von ≧ 4 hat. Erst dann kommen die Vorteile dieser Bauart deutlich zum Tragen, nämlich daß mit einer oder zwei Wicklungen auf einem einzigen Wickelkörper eine Vielzahl von Statorpolen erregt wird.

Bezüglich des Minimums der Statorpole bzw. der Wicklungen und der entsprechenden Ansteuerelektronik sind verschiedene Möglichkeiten gegeben. Gemäß einer vorteilhaften Ausführungsform ist der Motor zweipulsig ausgebildet, d.h. pro elektrischem Drehwinkel von 360° werden zwei Stromimpulse verschiedener Magnetisierungswirkungen auf die Statorwicklung geschaltet. Auf diese Weise ergeben sich nur sehr schmale Drehmomentlücken, die durch das vorstehend beschriebene Reluktanz-Hilfsmoment ausgefüllt werden. Diese zwei Stromimpulse verschiedener Magnetisierungswirkungen können entweder dadurch erzeugt werden, daß eine Statorwicklung vorgesehen ist, der nacheinander Stromimpulse abwechselnder Polarität zugeführt werden, oder daß zwei Statorwicklungen unterschiedlichen Wicklungssinns vorgesehen sind, denen abwechselnd Stromimpulse gleicher Polarität zugeführt werden. Zur Vereinfachung der Wicklung sind diese beiden Statorwicklungen unterschiedlichen Wicklungssinns zweckmäßigerweise bifilar gewickelt, wobei dann die entsprechenden Enden sinngemäß angeschlossen werden..

Es ist jedoch auch möglich, den Motor einpulsig auszubilden, d.h. pro elektrischem Drehwinkel von 360° nur einen Stromimpuls auf die Statorwicklung zu schalten. Zur Überbrückung der verhältnismäßig breiten Drehmomentlücke des elektromagnetischen Drehmomentes ist ein Hilfs-Permanentmagnet vorgesehen, der in der Impulspause ein Statorfeld umgekehrter Polarität erzeugt. Eine Lösung hierzu kann darin bestehen, daß zwischen den beiden Statorhälften axial neben der Statorwicklung ein axial magnetisierter Hilfs-Permanentmagnet in Scheibenform auf dem Weicheisenrückschluß angeordnet ist, der axial magnetisiert ist. Eine andere Lösung kann darin bestehen, daß parallel zum Klauenpol-Stator ein permanentmagnetischer Hilfsstator vorgesehen ist, der die gleiche Anzahl von in Umfangsrichtung abwechselnden Polen wie der Rotormagnet aufweist und mit diesem zusammenwirkt.

Die Erfindung wird nachfolgend anhand mehrerer Ausführungsbeispiele unter Bezug auf die beigefügten Zeichnungen näher erläutert.

Es zeigen:
- Fig. 1: eine Hälfte eines bürstenlosen Gleichstrommotors in Klauenpolbauart im Längsschnitt;
- Fig. 2: eine Ansicht einer Statorhälfte des Klauenpol-Stators in Draufsicht;
- Fig. 3: einen Schnitt quer durch die Statorhälfte nach Fig. 2;
- Fig. 4a und 4b: Drehmomentkurven eines bürstenlosen Gleichstrommotors in Klauenpolbauart mit geraden Polzähnen bzw. geschränkten Polzähnen;
- Fig. 5: einen Längsschnitt durch eine zweite Ausführungsform eines bürstenlosen Gleichstrommotors;
- Fig. 6a und 6b: eine Darstellung eines Hilfsmagneten für den Motor nach Fig. 5 in Draufsicht und im Schnitt;
- Fig. 7: einen Längsschnitt durch eine dritte Ausführungsform eines bürstenlosen Gleichstrommotors mit einem permanentmagnetischen Hilfsstator;
- Fig. 8a und 8b: eine Draufsicht bzw. einen Schnitt durch den Hilfsstator des Motors nach Fig. 7; und
- Fig. 9a und 9b: Strom- und Flußdiagramme zu einem ein- pulsigen Motor gemäß der Fig. 5 oder 7.

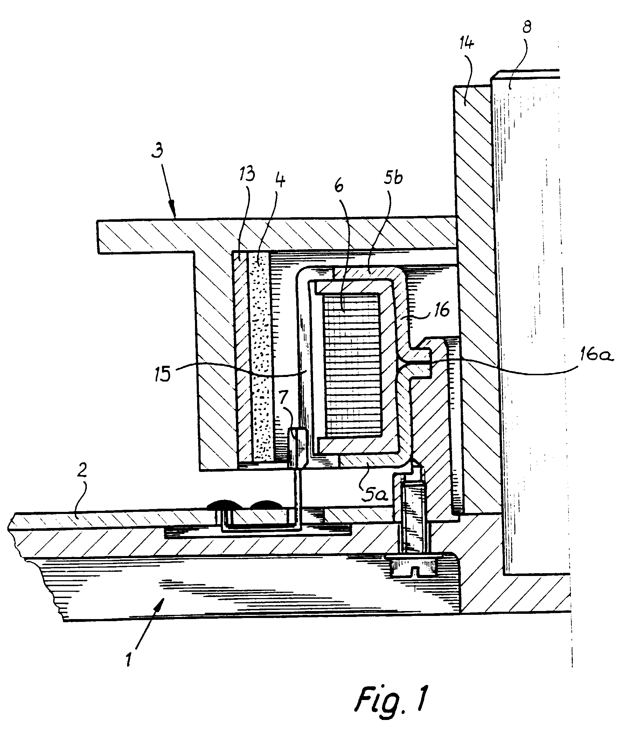

Der in der Fig. 1 hälftig gezeigte bürstenlose Gleichstrommotor in Klauenpolbauart weist folgende Teile auf:
Einen Sockelkörper 1, der eine Lagerachse 8 trägt und an dem eine Leiterplatte 2 sowie der Stator, bestehend aus zwei Statorhälften 5a und 5b, einem Wickelkörper und einer Wicklung 6, befestigt ist. Auf der Leiterplatte 2 sind ein Hallsensor 7 als Drehwinkelgeber sowie gegebenenfalls eine Elektronik zur Ansteuerung der Statorwicklung 6 angeordnet.

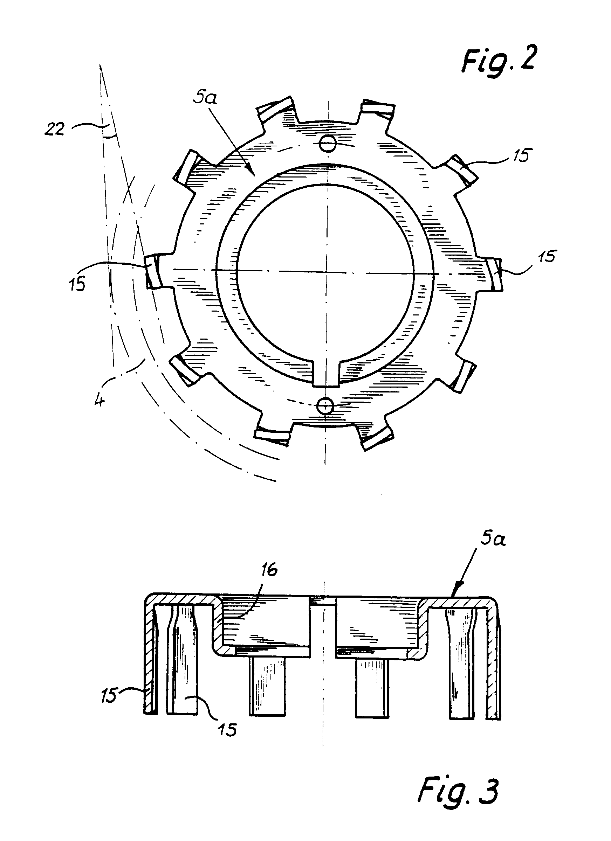

Auf der Lagerachse 8 ist mittels einer Lagerbuchse 14 ein Rotor 3 drehbar gelagert, der entweder die anzutreibende Einrichtung trägt oder mit dieser gekuppelt ist. Der Rotor 3 ist mit einem ringförmigen Rotormagneten 4 ausgestattet, der außerdem von einem weichmagnetischen Eisenrückschluß 13 umgeben ist. Der Stator des Motors besteht - wie bereits ausgeführt - aus zwei Statorhälften 5a und 5b, die zusammen den Klauenpolstator bilden und im einzelnen in den Fig. 2 und 3 dargestellt sind. Die in den Fig. 2 und 3 dargestellte Statorhälfte 5a weist um ihren Umfang verteilt zehn Polzähne 15 auf, die gegenüber der Umfangsrichtung um einen Winkel 22 geschränkt sind. Die Statorhälfte 5b ist ähnlich ausgebildet und mit der Statorhälfte 5a derart zusammengesetzt, daß die Polzähne 15 ineinandergreifen und somit einen 20-poligen Stator bilden. Die Statorhälften 5a und 5b nehmen, entsprechend zusammengesetzt, den Wickelkörper mit der Statorwicklung 6 auf. Innerhalb der Statorwicklung 6 wird der Eisenweg durch einen Eisenrückschluß 16 geschlossen, der an einer Stoßstelle 16a aus den beiden Statorhälften 5a und 5b zusammengesetzt ist, damit ein Einsetzen der Statorwicklung 6 mit dem Spulenkörper möglich ist.

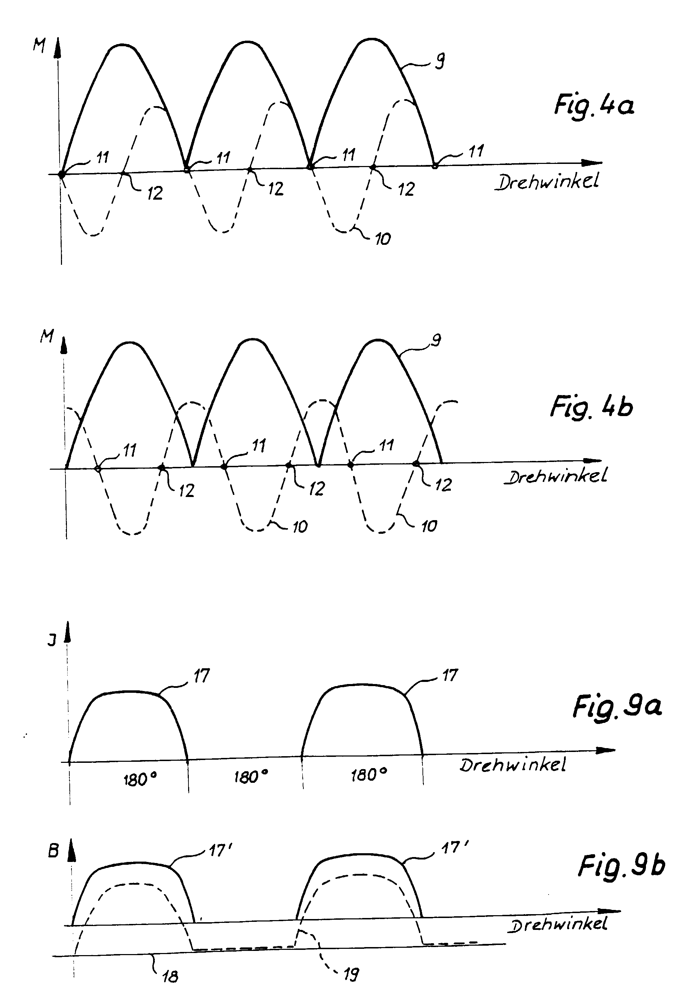

Fig. 4a zeigt den Drehmomentverlauf eines solchen Motors nach Fig. 1, wenn die in den Fig. 2 und 3 dargestellten Polzähne 15 nicht geschränkt wären, also genau in Umfangsrichtung verliefen. Die durchgezogene Kurve 9 zeigt das elektromagnetische Antriebsmoment bei einem zweipulsigen Motor, und es ist zu erkennen, daß sich jeweils Bereiche mit dem Antriebsmoment Null ergeben, die aufgrund der Kommutation der Statorwicklung 6 (gesteuert durch den Hallsensor 7) auch breiter sein können. Die gestrichelte Kurve 10 zeigt das Reluktanzmoment, d.h. das Moment, das aufgrund der permanentmagnetischen Kräfte ohne Strom in der Statorwicklung aufgrund der ausgeprägten Pole wirksam wird. Es ergeben sich, über den Drehwinkel gesehen, stabile Arbeitspunkte 11 und labile Arbeitspunkte 12. Dies bedeutet, daß der Motor jeweils immer bevorzugt in einem der stabilen Arbeitspunkte 11 zum Stillstand kommt, in dem bei Bestromung der Statorwicklung 6 gerade kein Drehmoment erzeugt werden kann. Der Motor kann also nicht anlaufen.

Werden nun die Polzähne 15, wie in den Fig. 2 und 3 dargestellt, geringfügig um den Winkel 22 geschränkt, so ergibt sich zwischen jedem der Polzähne 15 und dem inneren Umfang des Rotormagneten 4 (strichpunktiert angedeutet) ein sich über den Drehwinkel ändernder Luftspalt, der in der Ruhestellung (ohne Bestromung der Statorwicklung 6) den Rotor wiederum in stabile Arbeitspunkte 11 zieht, die jedoch - wie Fig. 4b zeigt - nicht innerhalb der Nullstellen des elektromagnetischen Antriebsmomentes 9 liegen. In dieser Figur sind auch labile Arbeitspunkte 12 dargestellt. Befindet sich der Rotor jedoch in einer der stabilen Arbeitspunkte 11 (Fig. 4b), so kann der Motor bei einer entsprechenden Bestromung der Statorwicklung 6 in definierter Richtung anlaufen, da in diesem Arbeitspunkt ein elektromagnetisches Drehmoment 9 vorhanden ist. Die Lücken im elektromagnetischen Drehmoment 9 werden also durch die positiven Bereiche des Reluktanzmomentes 10 ausgefüllt, so daß an jeder Stelle ein antreibendes Moment vorhanden ist.

Um das in den Fig. 4a und 4b dargestellte elektromagnetische Antriebsmoment 9 zu erzeugen, ist mindestens eine Statorwicklung 6 erforderlich, die innerhalb der beiden Statorhälften 5a und 5b angeordnet ist und den Eisenrückschluß 16 umschließt. Diese Wicklung muß pro elektrischem Drehwinkel von 360° zwei Stromimpulse verschiedener Magnetisierungswirkungen erhalten, damit sich ein elektromagnetisches Drehmoment entsprechend der Kurve 9 nach den Fig. 4a und 4b ergibt. Diese Bestromung kann bei einer einzigen Statorwicklung 6 mittels einer Brückenschaltung mit vier elektronischen Schaltern erfolgen, die drehwinkelabhängig vom Hallsensor 7 gesteuert werden. Es ist jedoch auch möglich, zwei Statorwicklungen 6 mit zueinander gegensätzlicher Polarität vorzusehen und nacheinander die eine und dann die andere Wicklung mit Stromimpulsen gleicher Polarität zu erregen, um abwechselnd verschiedene Magnetisierungswirkungen zu erhalten. Die letztere Möglichkeit spart elektronische Schaltelemente ein, erfordert jedoch zwei Wicklungen.

Wie nun aus den Fig. 9a und 9b hervorgeht, ist es jedoch auch möglich, nur eine Statorwicklung 6 pro 360° elektrischem Drehwinkel mit nur einem Stromimpuls 17 von bis zu 180° Länge zu erregen (s. Fig. 9a). Dabei ergibt sich (s. Fig. 9b) ein Flußdichtenverlauf 17' mit einer Lücke von 180°. Sieht man nun einen permanentmagnetischen Hilfsmagneten vor, der eine permanentmagnetische Flußdichte 18 mit negativer Polarität vorsieht, so ergibt sich ein resultierender Flußdichtenverlauf 19 (gestrichelt gezeichnet), der im ersten elektrischen Drehwinkel von 180° einen etwas verminderten positiven Wert und im anschließenden elektrischen Drehwinkel von 180° einen negativen Wert entsprechend der permanentmagnetischen Flußdichte aufweist. Diese wechselnde Flußdichte ohne große Lücken führt zu einem Antriebsmoment, das nur sehr geringe Lücken aufweist, die jedoch durch ein Reluktanzmoment 10 entsprechend der Kurve 4b überbrückt werden kann.

Praktische Lösungen entsprechend der in den Fig. 9a und 9b dargestellten Funktion werden nachfolgend erläutert.

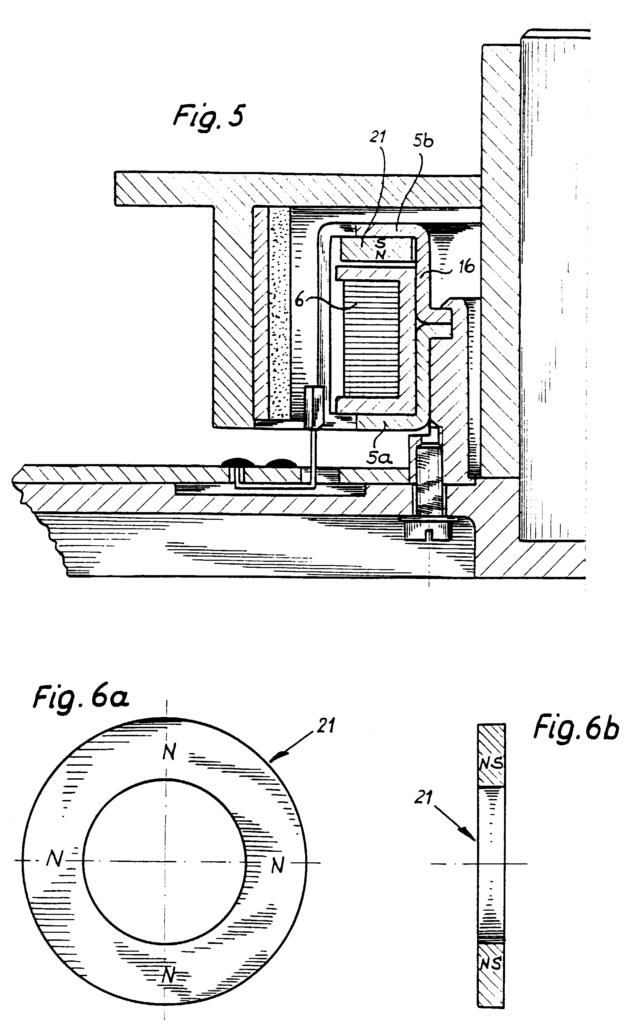

Fig. 5 zeigt eine Lösung, bei der die Breite des Spulenkörpers mit der Statorwicklung 6 etwas vermindert ist und auf dem Eisenrückschluß 16 des Stators ein ringförmiger Hilfsmagnet 21 angeordnet ist. Die Form dieses Hilfsmagneten 21 ist in den Fig. 6a und 6b dargestellt. Es ist zu sehen, daß eine NS-Magnetisierung in axialer Richtung vorhanden ist, d.h., die eine Fläche des Hilfsmagneten wirkt als Nordpol und die entgegengesetzte Fläche als Südpol. Alle übrigen Teile der Ausführungsform nach Fig. 5 sind ähnlich der Ausführungsform nach Fig. 1 ausgebildet.

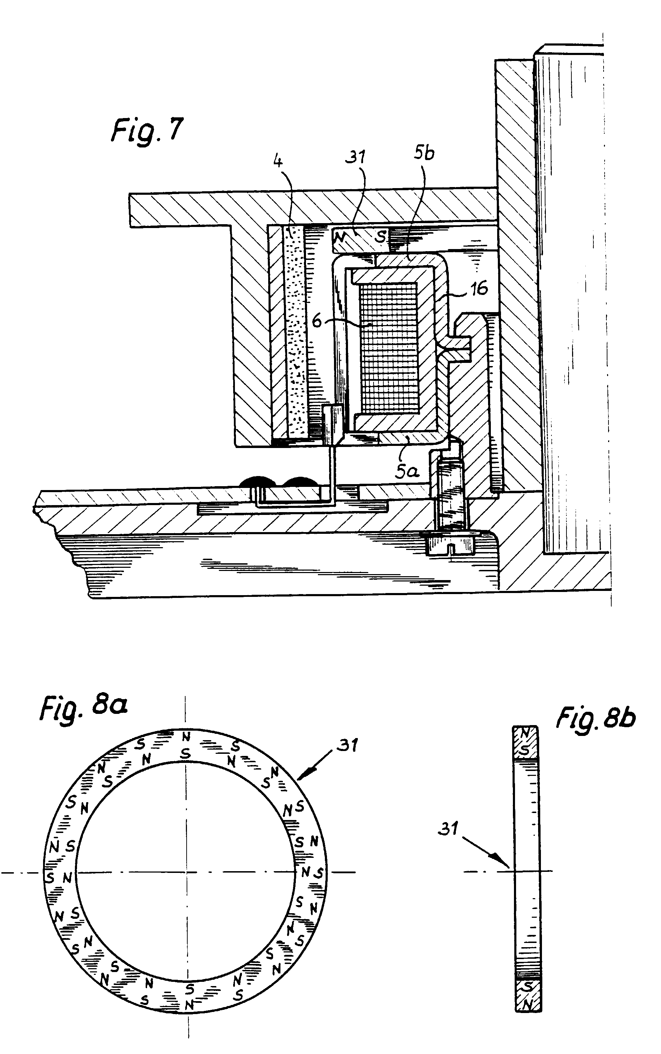

Fig. 7 zeigt nun eine weitere Ausführungsform, bei der ein permanentmagnetischer Hilfsstator 31 außerhalb der beiden Statorhälften 5a und 5b, aber noch innerhalb des Wirkungsbereiches des Rotormagneten 4 angeordnet ist. Dieser Hilfsstator 31 wirkt parallel zum elektromagnetisch erregten Stator 5a, 5b und bewirkt ebenfalls die gleiche Wirkung wie in Fig. 9b dargestellt. Wie die Fig. 8a und 8b jedoch zeigen, muß der Hilfsstator 31 als Ringmagnet ausgebildet sein, der an seinem Umfang die gleiche Anzahl von Polen aufweist, wie Polzähne 15 an beiden Statorhälften 5a und 5b vorhanden sind. Weisen jede der Statorhälften 5a und 5b also je zehn Polzähne 15 auf, so muß der Hilfsstator 31 also zwanzig Pole haben. In den Fig. 8a und 8b ist die Magnetisierung zwar radial gezeichnet, es ist jedoch auch möglich, eine andere Magnetisierungsart zu wählen; wichtig ist nur, daß am Außenumfang die entsprechende Anzahl von Polen mit jeweils wechselnder Magnetisierung vorgesehen ist.

## Patentansprüche

1. Bürstenloser und als Klauenmotor ausgebildeter Gleichstrommotor für niedrige Drehzahlen zum Antrieb von Einrichtungen mit einem Permanentmagnet-Außenläufer und einem Drehpositionsgeber zur Durchschaltung der Betriebsspannung an mindestens eine Statorwicklung, wobei der Motor zwei mit ineinandergreifenden Polzähnen (15) ausgestattete Statorhälften (5a, 5b) aus Weicheisen, die durch eine innerhalb der Statorwicklung (6) liegenden Weicheisenrückschluß den Eisenkreis des Stators bilden, aufweist, dadurch gekennzeichnet, daß zur Erzeugung eines zusätzlichen die Lücken des elektromagnetischen Antriebsmoments (9) im Bereich der Kommutierung ausfüllenden Reluktanz-Hilfsmoments (10) durch einen über den Drehwinkel variablen Luftspalt die Polzähne (15) einer oder beider Statorhälften (5a, 5b) gegenüber der Umfangsrichtung schräg gestellt sind.

2. Bürstenloser Gleichstrommotor nach Anspruch 1, dadurch gekennzeichnet, daß er eine Polpaarzahl ≥ 4 hat.

3. Bürstenloser Gleichstrommotor nach Anspruch 1 oder 2, dadurch gekennzeichnet, daß der Motor zweipulsig ausgebildet ist, d. h., daß pro elektrischem Drehwinkel von 360° zwei Stromimpulse verschiedener Magnetisierungswirkungen auf die Statorwicklung (6) geschaltet werden.

4. Bürstenloser Gleichstrommotor nach Anspruch 3, dadurch gekennzeichnet, daß eine Statorwicklung (6) vorgesehen ist, der nacheinander Stromimpulse abwechselnder Polarität zugeführt werden.

5. Bürstenloser Gleichstrommotor nach Anspruch 3, dadurch gekennzeichnet, daß zwei Statorwicklungen (6) unterschiedlichen Wicklungssinns vorgesehen sind, der abwechselnd Stromimpulse gleicher Polarität zugeführt werden.

6. Bürstenloser Gleichstrommotor nach Anspruch 5, dadurch gekennzeichnet, daß die Statorwicklungen (6) bifilar gewickelt sind.

7. Bürstenloser Gleichstrommotor nach einem der Ansprüche 1 bis 2, dadurch gekennzeichnet, daß der Motor einpulsig ausgebildet ist, d. h., daß pro elektrischem Drehwinkel von 360° ein Stromimpuls (17) auf die Statorwicklung (6) geschaltet wird und daß ein Hilfs-Permanentmagnet (21, 31) vorgesehen ist, der in der Impulspause ein Statorfeld umgekehrter Polarität erzeugt.

8. Bürstenloser Gleichstrommotor nach Anspruch 7, dadurch gekennzeichnet, daß zwischen den beiden Statorhälften (5a, 5b) axial neben der Statorwicklung (6) ein axial magnetisierter Hilfs-Permanentmagnet (21) in Scheibenform auf dem Weicheisenrückschluß (16) angeordnet ist, der axial magnetisiert ist.

9. Bürstenloser Gleichstrommotor nach Anspruch 7, dadurch gekennzeichnet, daß parallel zum Klauenpol-Stator (5a, 5b) ein permanentmagnetischer Hilfsstator (31) vorgesehen ist, der die gleiche Anzahl von in Umfangsrichtung abwechselnden Polen wie der Rotormagnet (4) aufweist und mit diesem zusammenwirkt.

## Claims

1. A brushless direct current motor constructed as a claw motor for low speeds, for driving devices with a permanent magnet external rotor and a rotated position transmitter for switching the operating voltage to at least one stator winding, whereby the motor has two stator halves (5a, 5b) of soft iron and equipped with inter-engaging pole teeth (15) and which, via a soft iron back-circuit located within the stator winding (6) form the ferro-magnetic circuit of the stator, characterised in that to generate an additional auxiliary reluctance moment (10) to fill the gaps in the electromagnetic driving moment (9) in the region of the commutation and through an air gap which is variable over the angle of rotation, the pole teeth (15) of one or both stator halves (5a, 5b) are set slantwise to the peripheral direction.

2. A brushless direct current motor according to Claim 1, characterised in that it has a number of pairs of poles ≥ 4.

3. A brushless direct current motor according to Claim 1 or 2, characterised in that the motor is of two-pulse construction, i.e. in that per electrical angle of rotation of 360°, two current pulses of different magnetisation effects are connected to the stator winding (6).

4. A brushless direct current motor according to Claim 3, characterised in that a stator winding (6) is provided to which current pulses of alternating polarity are fed one after another.

5. A brushless direct current motor according to Claim 3, characterised in that two stator windings (6) of different winding direction are provided, to which current pulses of the same polarity are alternately fed.

6. A brushless direct current motor according to Claim 5, characterised in that the stator windings (6) are wound in bifilar manner.

7. A brushless direct current motor according to one of Claims 1 to 2, characterised in that the motor is of single-pulse construction, i.e. that per electrical angle of rotation of 360° one current pulse (17) is connected to the stator winding (6) and in that an auxiliary permanent magnet (21, 31) is provided which generates a stator field cf reversed polarity in the interval between pulses.

8. A brushless direct current motor according to Claim 7, characterised in that between the two stator halves (5a, 5b) there is axially beside the stator winding (6) an axially magnetised auxiliary permanent magnet (21) of disc form disposed on the soft iron back circuit (16) which is axially magnetised.

9. A brushless direct current motor according to Claim 7, characterised in that parallel with the claw-pole stator (5a, 5b) there is a permanent magnet auxiliary stator (31) which has the same number of poles alternating in the peripheral direction as the rotor magnet (4) with which it cooperates.

## Revendications

1. Moteur d'entraînement lent, à courant continu, sans balais et équipé de pôles à griffes, pour entraîner des dispositifs comportant un rotor extérieur à aimant permanent, un indicateur de position pour connecter la tension de service à au moins un enroulement statorique, ainsi que deux moitiés de stator (5a, 5b) en fer doux qui ont des dents polaires (15) imbriquées les unes dans les autres et qui par l'intermédiaire d'une fermeture en fer doux situé à l'intérieur de l'enroulement statorique (6) constituent le circuit magnétique du stator,
caractérisé en ce que
les dents polaires portées par l'une ou les deux moitiés du stator (5a, 5b) sont obliques par rapport à la direction périphérique, ceci pour obtenir, par l'intermédiaire d'un entrefer variable avec l'angle de rotation, un couple auxiliaire de réluctance (10) venant complémenter les vides du couple électromagnétique d'entraînement (9) dans la zone de commutation.

2. Moteur à courant continu selon la revendication 1,
caractérisé en ce que
le nombre des paires de pôles est au moins égal à quatre.

3. Moteur à courant continu selon la revendication 1 ou 2,
caractérisé en ce que
le moteur est à double impulsion, c'est-à-dire que pour chaque rotation électrique de 360°, deux impulsions de courant à effets magnétisants différents sont envoyées à l'enroulement statorique (6).

4. Moteur à courant continu selon la revendication 3,
caractérisé en ce qu'
il comporte un enroulement statorique (6) auquel sont envoyées successivement des impulsions de courant de polarités alternées.

5. Moteur à courant continu selon la revendication 3,
caractérisé en ce qu'
il comporte deux enroulements statoriques (6) à sens d'enroulement différents, auxquels sont envoyées alternativement des impulsions de courant de même polarité.

6. Moteur à courant continu selon la revendication 5,
caractérisé en ce que
les enroulements statoriques (6) sont bifilaires.

7. Moteur à courant continu selon la revendication 1 ou 2,
caractérisé en ce que
le moteur est à mono-impulsion, c'est-à-dire que pour chaque rotation électrique de 360° une impulsion de courant (17) est commutée au roulement statorique (6) et qu'il est prévu un aimant permanent auxiliaire (21, 31) qui produit, entre les impulsions, un champ statorique de polarité inverse.

8. Moteur à courant continu selon la revendication 7,
caractérisé en ce qu'
il comporte entre les deux moitiés de stator (5a, 5b) et à proximité axiale de l'enroulement statorique (6) un aimant permanent auxiliaire (21) à magnétisation axiale ayant la forme d'un disque monté sur la fermeture en fer doux (16) lui-même magnétisé axialement.

9. Moteur à courant continu selon la revendication 7,
caractérisé en ce qu'
il est prévu, parallèlement au stator à pôles à griffes (5a, 5b) un stator auxiliaire (31) à aimantation permanente, ayant le même nombre de pôles montés en alternance sur sa périphérie que l'aimant rotorique (4) et coopérant avec ce dernier.
